# EUROPEAN PATENT SPECIFICATION

(11) **EP 3 567 220 B1**
(45) Date of publication and mention of the grant of the patent: **17.02.2021**
(21) Application number: 19173664.4
(22) Date of filing: 09.05.2019
(51) Int. Cl.: F01D 9/06, F01D 5/18

(54) **VANE INCLUDING INTERNAL RADIANT HEAT SHIELD**
SCHAUFEL MIT INTERNEM STRAHLUNGSHITZESCHILD
VANNE COMPRENANT UN BOUCLIER THERMIQUE RADIANT INTERNE

(30) Priority: 11.05.2018 US 201815977331
(43) Date of publication of application: 13.11.2019
(73) Proprietor: United Technologies Corporation, Farmington, CT 06032 (US)
(72) Inventor: THORNTON, Lane Mikal, Tolland, CT 06084 (US); GENERALE, Adam P., Dobbs Ferry, NY 10522 (US)
(74) Representative: Dehns

(56) References cited:
- WO-A2-2014/158284
- GB-A- 2 226 600
- US-A1- 2006 120 869
- US-A1- 2014 205 447
- US-B1- 6 514 046

## Description

### BACKGROUND

This application relates to vanes, and more particularly to a vane having a radiant heat shield.

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

The turbine section includes components such as turbine vanes that are subjected to high temperatures during engine operation. Conventional turbine vanes have been made of a single crystal nickel superalloy that forms an aerodynamic surface of the vane as well as carrying any structural loads. More recently, it has been proposed to form vanes of a non-metallic material, such as a ceramic matrix composite (CMC). CMC vanes can withstand higher operating temperatures than a single crystal nickel superalloy, but cannot support structural loads as well as the single crystal nickel superalloy vanes.

US2014/205447A1 discloses a prior art component according to the preamble of claim 1. US6514046B1, WO2014/158284A2 and US2006/120869A1 disclose other prior art components.

### SUMMARY

From one aspect, the present invention provides a component for a gas turbine engine according to claim 1.

From another aspect, the present invention provides a gas turbine engine in accordance with claim 14.

Features of embodiments are recited in the dependent claims.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 is a schematic view of an example gas turbine engine.
Figure 2 is a schematic view of a portion of a gas turbine engine.
Figure 3A is a cross-sectional view of a turbine vane of Figure 2 taken along line B-B of Figure 2.
Figure 3B is a schematic view of an example radiant heat shield spacing configuration for a turbine vane.
Figure 3C is a schematic view of another example radiant heat shield spacing configuration for a turbine vane.
Figure 3D is a schematic view of another example radiant heat shield spacing configuration for a turbine vane.
Figure 3E is an enlarged view of a portion of Figure 3A.
Figure 4A is a schematic view of an example turbine vane.
Figure 4B is a schematic view of another example turbine vane.
Figure 4C is a schematic view of another example turbine vane.
Figure 5 is a schematic view of an example arrangement for securing a radiant heat shield to a radially inner platform.

### DETAILED DESCRIPTION

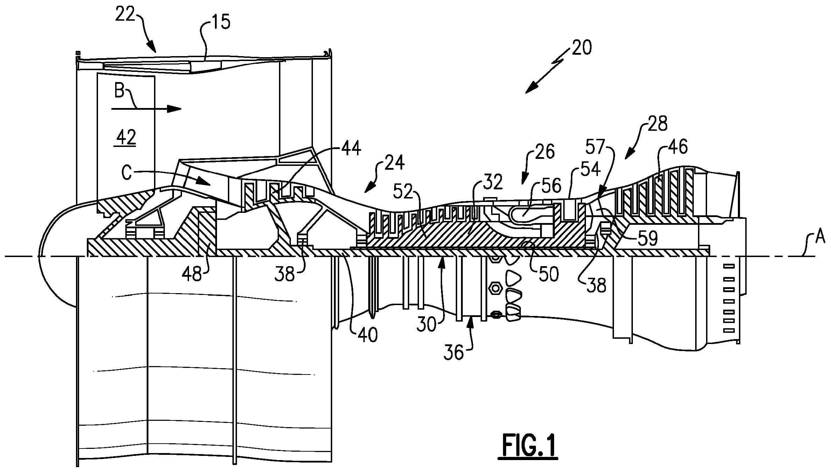

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of 1bm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

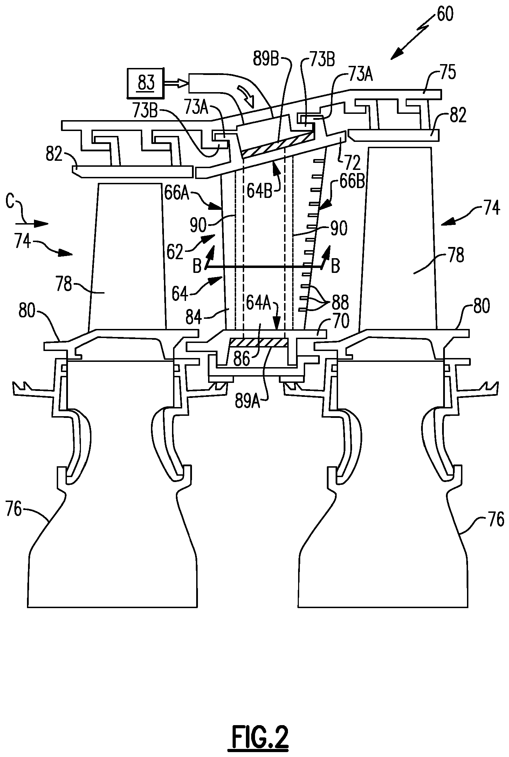

Figure 2 shows a schematic view of selected portions of a section 60 of a gas turbine engine, such as a portion of the turbine section 28 of the gas turbine engine 20 of Figure 1. In this example, the section 60 includes a vane section 62 having a stator vane 64 that has an airfoil shape and has a leading edge 66A and a trailing edge 66B. The vane 64 extends between a radially inner platform 70 and a radially outer platform 72. In this disclosure, "radially inner" and "radially outer" refer to the engine central longitudinal axis A. In the example of Figure 2, the radially outer platform 72 includes hooks 73A that engage hooks 73B of engine case 75.

The vane section 62 is spaced axially away from rotor sections 74 with respect to the engine central longitudinal axis A. The rotor sections 74 each include a rotor disk 76 carrying one or more blades 78 extending from a platform 80 for rotation about the engine central longitudinal axis A. In the example of Figure 2, the rotor sections 74 also include a blade outer air seal 82 ("BOAS") situated radially outward of the blades 78.

The vane 64 includes an internal cavity 84 that extends radially outward from the radially inner platform 70 to the radially outer platform 72. The internal cavity 84 is in fluid communication with a source 83 of cooling air. The vane 64 includes a plurality of trailing edge openings 88 that allow the cooling air to exit through the trailing edge 66B.

A first end 64A of the vane 64 extends to the radially inner platform 70, and the opposite second end 64B of the vane 64 extends to the radially outer platform 72. In one example, the vane 64 is connected as a single component with the radially inner platform 70 and radially outer platform 72.

A spar 86 is disposed within the internal cavity 84. The spar 86 extends between the radially inner platform 70 and the radially outer platform 72, and defines a primary load path between the platforms 70, 72. In the non-limiting example of Figure 2, the spar 86 is held in place by plate 89A that abuts the radially inner platform 70 and plate 89B that abuts the radially outer platform 72. However, other attachment arrangements could be used, such as one in which the spar 86 engaged hooks 73B of engine case 75 (e.g., by being integral with the hooks 73A of the radially outer platform 72).

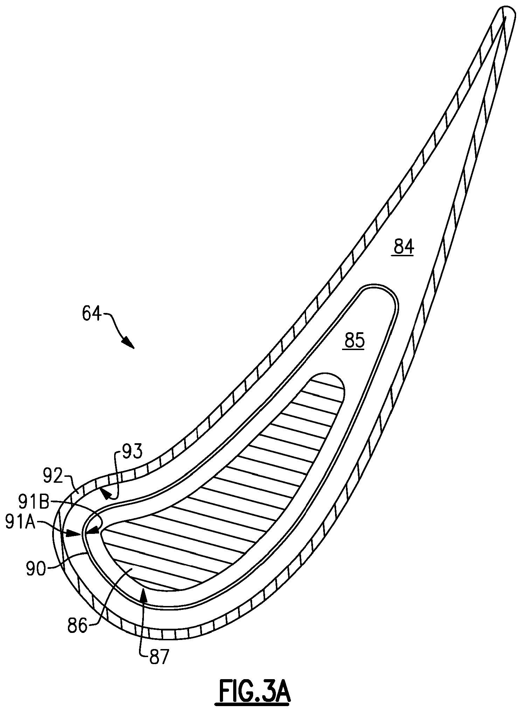

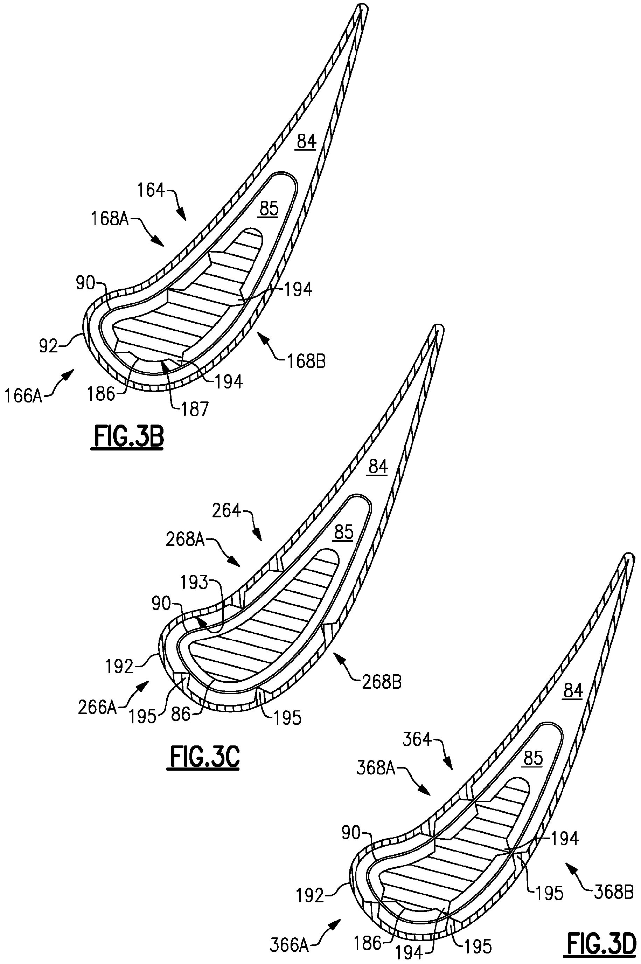

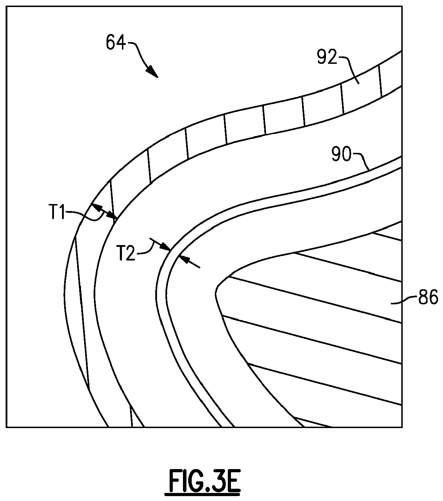

A radiant heat shield 90 is also disposed within the internal cavity and circumscribes the spar 86. The radiant heat shield 90 protects the spar 86 from radiant heat from an interior of an airfoil shell 92 of the vane 64 (see Figure 3), and has a reflectance to radiant heat that is greater than or equal to that of the spar. According to the invention (e.g., where the spar 86 and radiant heat shield 90 are composed of different materials), a reflectance of the radiant heat shield 90 is greater than or equal to that of the spar 86. In the example of Figure 2, the radiant heat shield 90 continuously circumscribes the spar 86 between the radially inner platform 70 and the radially outer platform 72. In one example, the radiant heat shield 90 is substantially non-load bearing.

Figure 3A is a cross-sectional view of the turbine vane 64 of Figure 2 taken along line B-B of Figure 2. Referring now to Figure 3A with continued reference to Figure 2, the vane 64 includes an airfoil shell 92 that defines the internal cavity 84. The airfoil shell 92 has a greater resistance to heat than the spar 86, and the spar 86 has a greater strength than the airfoil shell 92.

The radiant heat shield 90 is enclosed within the airfoil shell 92. As used herein, the radiant heat shield 90 being "enclosed within" the airfoil shell 92 means that no portion of the radiant heat shield 90 extends outside of the airfoil shell 92.

A portion 85 of the internal cavity 84 is provided between the spar 86 and the radiant heat shield 90. The portion 85 is in fluid communication with the source 83 of cooling air. The radiant heat shield 90 segments portion 85 of the internal cavity 84, and thereby concentrates a flow of cooling air within the portion 85. By segmenting the portion 85 from the larger internal cavity 84, the radiant heat shield 90 enhances convective cooling of the cooling air from source 83 within the portion 85, because the cooling area is concentrated in a smaller area. Also, because the cooling air within the portion 85 is segmented from the hotter temperature air in the internal cavity outside of the portion 85, the exit temperature of the cooling air is reduced, making it more useful for cooling downstream components (e.g., downstream blades).

The radiant heat shield 90 protects the spar 86 from a radiant heat load applied to the airfoil shell 92. The radiant heat shield 90 has a reflectance, an emissivity, and an absorptivity, each of which are measurable on a scale of 0% - 100%. The reflectance refers to a degree to which the radiant heat shield 90 reflects radiant heat away from itself. The absorptivity refers to a degree to which the radiant heat shield 90 absorbs incident radiant heat. The emissivity refers to a degree to which the radiant heat shield re-emits radiant heat from its interior surface 91B that the radiant heat shield 90 absorbs from its exterior surface 91A. In one example, the radiant heat shield 90 includes one or any combination of the following attributes: a reflectance that is 50-99%, an emissivity that is 1-50%, and an absorptivity that is 1-80%. In one example, the radiant heat shield 90 includes a coating, such as magnesium fluoride (MgF₂) or calcium fluoride (CaF₂) to improve its reflectance. The radiant heat shield 90 could be polished to improve its reflectivity after coating, or without a coating.

As shown in Figure 3A, the radiant heat shield 90 is spaced apart from an inner surface 93 of the airfoil shell 92, and is also spaced away from an outer surface 87 of the spar 86. In one example, the radiant heat shield 90 does not contact the airfoil shell 92 and also does not contact the spar 86. Optionally, spacers can be utilized to maintain that spacing.

In this disclosure, like reference numerals designate like elements where appropriate and reference numerals with the addition of one-hundred or multiples thereof designate modified elements that are understood to incorporate the same features and benefits of the corresponding elements.

Figure 3B is a schematic view of a turbine vane 164 using a first example spacing configuration for the radiant heat shield 90. The turbine vane 164 includes a pressure side 168A and a suction side 168B. In the example of Figure 3B, the spar 186 includes a plurality of lateral extensions 194 that extend away from the outer surface 187 of the spar 186 and space the radiant heat shield 90 away from the outer surface 187 of the spar 186. In particular, the extensions 194 are disposed along a pressure side 168A, suction side 168B, and leading edge 166A of the vane 164.

Figure 3C is a schematic view of a turbine vane 264 using a second example spacing configuration for the radiant heat shield 90. In the example of Figure 3C, the airfoil shell 192 includes a plurality of lateral extensions 195 that extend away from the inner surface 193 of the spar airfoil shell 192 and space the radiant heat shield 90 away from the inner surface 193 of the airfoil shell 192. In particular, the lateral extensions 195 are disposed along a pressure side 268A, suction side 268B, and leading edge 266A of the vane 264.

Figure 3D is a schematic view of a turbine vane 364 using a third example spacing configuration for the radiant heat shield 90 that utilizes the spar 186 of Figure 3B and the airfoil shell 192 of Figure 3C such that each of the spar 186 and airfoil shell 192 include respective lateral extensions 194, 195. In the example of Figure 3D, the lateral extensions 194, 195 are disposed along a pressure side 368A, suction side 368B, and leading edge 366A of the vane 364.

Figure 3E is an enlarged view of a portion of Figure 3A. As shown in the example of Figure 3E, the airfoil shell 92 defines a first wall having a thickness T1 measured perpendicular to the outer surface 87 of the spar. The radiant heat shield 90 defines a second wall having a thickness T2 measured perpendicular to the outer surface 87 of the spar. In the non-limiting example of Figure 3E, the thickness T1 is at least twice the thickness T2. It is understood, however, that other thicknesses could be used.

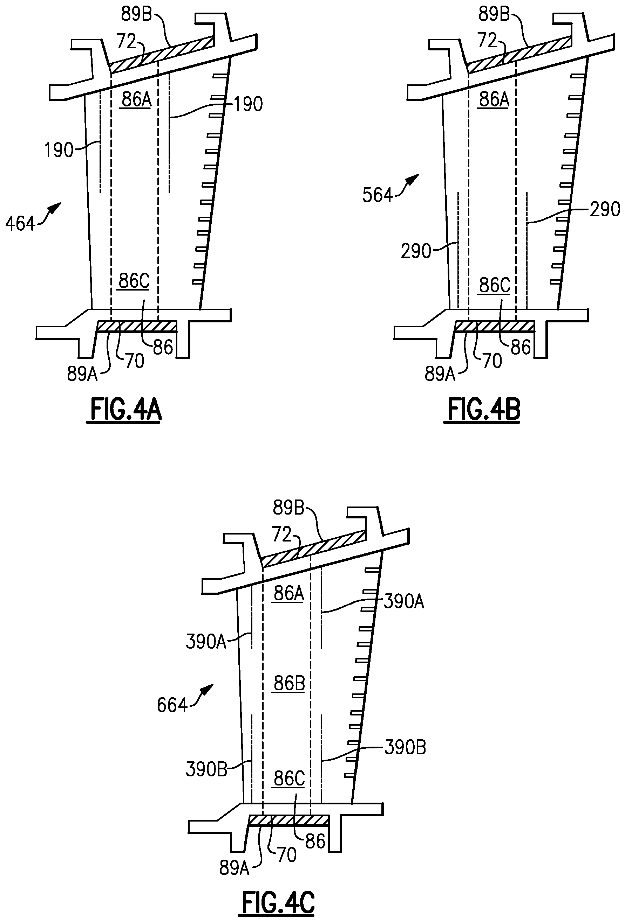

Figure 4A is a schematic view of an example turbine vane 464 in which the radiant heat shield 190 discontinuously circumscribes the spar 86 between the radially inner platform 70 and the radially outer platform 72. In particular, the radiant heat shield 190 circumscribes a portion 86A of the spar 86 that extends from the radially outer platform 72, but does not circumscribe a portion 86C of the spar 86 that extends from the radially inner platform 70.

Figure 4B is a schematic view of another example turbine vane 564 in which radiant heat shield 290 discontinuously circumscribes the spar 86 between the radially inner platform 70 and the radially outer platform 72. In particular, the radiant heat shield 290 circumscribes a portion 86C of the spar 86 that extends from the radially inner platform 70, but does not circumscribe portion 86A of the spar 86 that extends from the radially outer platform 72.

Figure 4C is a schematic view of another example turbine vane 564 in which radiant heat shield 390 discontinuously circumscribes the spar 86 between the radially inner platform 70 and the radially outer platform 72. In particular, the radiant heat shield 390 includes a first portion 390A that continuously circumscribes the portion 86A of the spar 86 that extends from the radially outer platform 72, and includes a second portion 390B that is separate from the first portion 390A and circumscribes the portion 86C of the spar 86 that extends from the radially inner platform 70. In the example of Figure 4C, the radiant heat shield 390 does not circumscribe an intermediate portion 86B that is between the portions 86A, 86C of the spar 86. In one example, the radiant heat shields 190, 290, 390 of Figures 4A-C provide a weight savings over the radiant heat shield 90 of Figure 2 by using less material.

The spacing configurations shown in any of Figures 3B-3D could be used in the embodiments of any of Figures 2 and 4A-C to maintain a desired offset between the radiant heat shield 90 and one or both of the spar 86 and airfoil shell 92.

The airfoil shell 92 is formed of a high-temperature material that is capable of withstanding extended continuous operation at high temperatures (e.g., on the order of 2200°F (1204°C) and above). Some example high temperature materials include a ceramic matrix composite (CMC) and alloys that contain one or more of niobium, tantalum, tungsten, rhenium, molybdenum.

In one example, the spar is at least partially composed of a nickel alloy. In one example, the spar 86 is composed of a different material than the radiant heat shield 90 and the airfoil shell 92.

In one example, the radiant heat shield 90 includes an alloy of one or more of nickel, cobalt, and gold. In one example, the radiant heat shield 90 is made from the same material as either the airfoil shell 92 or the spar 86. In one example, the radiant heat shield 90 is made of sheet metal.

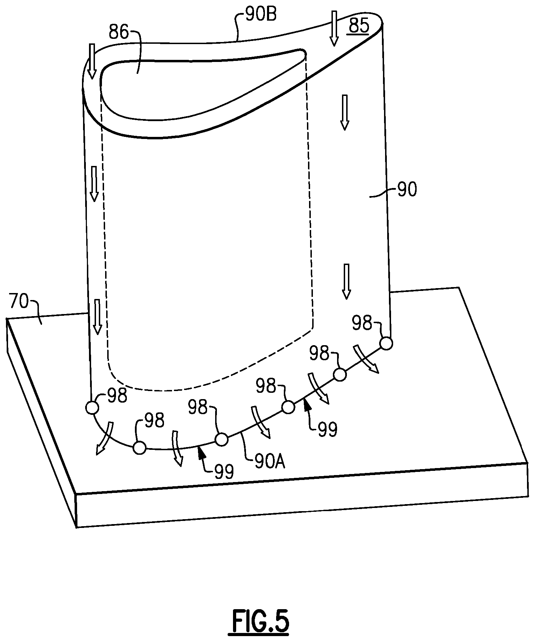

Figure 5 schematically illustrates an example of how a first end 90A of the radiant heat shield 90 can be secured to the radially inner platform 70 using a plurality of tack welds 98. In this example, the entirety of first end 90A of the radiant heat shield is not sealed to the radially inner platform 70, which provides passages 99 between end 90A of the radiant heat shield 90 and the radially inner platform 70, and between the tack welds 98. The passages 99 permit a flow of cooling air from the portion 85 of the cavity between the spar 86 and radiant heat shield 90 to flow radially inward from the source 83 of cooling air, and then to exit the portion 85 through between the tack welds 98, and then exit the trailing edge openings 88 shown in Figure 2. Although not shown in Figure 5, the opposite second end 90B of the radiant heat shield could be secured to the radially outer platform 72 in a similar manner using a plurality of tack welds and passages between the second end 90B and the radially outer platform 72.

The spar 86 provides a primary load path between the radially inner platform 70 and radially outer platform 72, and bears a load that in the prior art would have been borne primarily by the exterior of the vane 64. The spar 86 can support a greater structural load than the airfoil shell 92, but may be unable to withstand the same temperatures as the airfoil shell 92. The radiant heat shield 90 mitigates application of radiant heat from the airfoil shell 92 to the spar 86, and thereby facilitates the use of an airfoil shell 92 that is well-suited for operation in high temperatures (and that needs less structural load bearing capability), and use of a spar 86 that is well-suited for load bearing (and that needs less high temperature operation capability).

Although turbine vanes, are discussed in the examples above, it is understood that the vane features discussed above could be applied to other vanes of a gas turbine engine, such as vanes in the compressor section 24.

Although example embodiments have been disclosed, a worker of ordinary skill in this art would recognize that certain modifications would come within the scope of this disclosure. For that reason, the following claims should be studied to determine the scope and content of this disclosure.

## Claims

1. A component for a gas turbine engine, comprising:
an airfoil shell (92; 192) having an internal cavity (84) and extending between a radially inner platform (70) and a radially outer platform (72);
a spar (86; 186) disposed within the internal cavity (84); and
a radiant heat shield (90; 190; 290; 390) that circumscribes the spar (86; 186) within the internal cavity (84), the radiant heat shield (90; 190; 290; 390) enclosed within the airfoil shell (92; 192);
**characterised in that**:
the airfoil shell (92; 192) has a greater resistance to heat than the spar (86; 186);
the spar (86; 186) has a greater strength than the airfoil shell (92; 192); and
the radiant heat shield (90; 190; 290; 390) has a reflectance to radiant heat that is greater than or equal to that of the spar (86; 186).

2. The component of claim 1, wherein the radiant heat shield (90; 190; 290; 390) is at least partially spaced apart from an outer surface (87; 187) of the spar (86; 186) and an inner surface (93; 193) of the airfoil shell (92).

3. The component of claim 2, wherein the airfoil shell (192) comprises a plurality of lateral extensions (195) that extend away from the inner surface (193) of the airfoil shell (192) and space the radiant heat shield (90; 190; 290; 390) away from the inner surface (193) of the airfoil shell (192).

4. The component of claim 2 or 3, wherein the outer surface (187) of the spar (186) comprises a plurality of lateral extensions (194) that extend away from the outer surface (187) of the spar (186) and space said radiant heat shield (90; 190; 290; 390) away from the outer surface (187) of the spar (186).

5. The component of any preceding claim, wherein the radiant heat shield (90) continuously circumscribes the spar (86; 186) between the radially inner platform (70) and the radially outer platform (72).

6. The component of any of claims 1 to 4, wherein the radiant heat shield (190; 290; 390) discontinuously circumscribes the spar (186) between the radially inner platform (70) and the radially outer platform (72).

7. The component of claim 6, wherein the radiant heat shield (190; 290) continuously circumscribes a portion of the spar (86; 186) that extends from one of the radially inner platform (70) and the radially outer platform (72).

8. The component of claim 6, wherein the radiant heat shield (390) comprises:
a first portion (390B) that continuously circumscribes a portion of the spar (86; 186) that extends from the radially inner platform (70); and
a second portion (390A) that is separate from the first portion (390B) and circumscribes a portion of the spar (86; 186) that extends from the radially outer platform (72).

9. The component of any preceding claim, wherein:
the spar (86; 186) comprises a nickel alloy;
the airfoil shell (92; 192) comprises an alloy comprising one or more of niobium, tantalum, tungsten, rhenium, and molybdenum; and
the radiant heat shield (90; 190; 290; 390) comprises an alloy comprising one or more of nickel, cobalt, and gold.

10. The component of any preceding claim, wherein the radiant heat shield has at least one of an emissivity that is 1-50%, a reflectance that is 50-99%, and an absorptivity that is 1-80%.

11. The component of any preceding claim, wherein the airfoil shell (92; 192) defines a first wall having a first thickness (T1) measured perpendicular to an/the outer surface (87; 187) of the spar (86), and the radiant heat shield (90; 190; 290; 390) defines a second wall having a second thickness (T2) measured perpendicular to the outer surface (87; 187) of the spar (86; 186), and the first thickness (T1) is at least twice the second thickness (T2).

12. The component of any preceding claim, wherein a portion (85) of the internal cavity (84) defined between the spar (86; 186) and the radiant heat shield (90; 190; 290; 390) is in fluid communication with a source of cooling air (83).

13. The component of any preceding claim, wherein the airfoil shell (92; 192) is part of a turbine vane (64).

14. A gas turbine engine (20) comprising:
a compressor section (24);
a combustor section (26) in fluid communication with the compressor section (24); and
a turbine section (28) in fluid communication with the combustor section (26), the turbine section (28) including a turbine vane (64), the turbine vane (64) comprising the component of any of claims 1 to 12.

## Patentansprüche

1. Bauteil für ein Gasturbinentriebwerk, umfassend:
einen Schaufelprofilmantel (92; 192), der einen inneren Hohlraum (84) aufweist und sich zwischen einer radial inneren Plattform (70) und einer radial äußeren Plattform (72) erstreckt;
einen Holm (86; 186), der innerhalb des inneren Hohlraums (84) angeordnet ist; und
einen Strahlungshitzeschild (90; 190; 290; 390), der den Holm (86; 186) innerhalb des inneren Hohlraums (84) umgibt; wobei der Strahlungshitzeschild (90; 190; 290; 390) innerhalb des Schaufelprofilmantels (92; 192) umschlossen ist;
**dadurch gekennzeichnet, dass**:
der Schaufelprofilmantel (92; 192) eine größere Hitzebeständigkeit als der Holm (86; 186) aufweist;
der Holm (86; 186) eine größere Festigkeit als der Schaufelprofilmantel (92; 192) aufweist; und
der Strahlungshitzeschild (90; 190; 290; 390) ein Reflexionsvermögen gegenüber Strahlungshitze aufweist, das größer oder gleich demjenigen des Holms (86; 186) ist.

2. Bauteil nach Anspruch 1, wobei der Strahlungshitzeschild (90; 190; 290; 390) mindestens teilweise von einer Außenfläche (87; 187) des Holms (86; 186) und einer Innenfläche (93; 193) des Schaufelprofilmantels (92) beabstandet ist.

3. Bauteil nach Anspruch 2, wobei der Schaufelprofilmantel (192) eine Vielzahl von lateralen Fortsätzen (195) umfasst, die sich von der Innenfläche (193) des Schaufelprofilmantels (192) weg erstrecken und den Strahlungshitzeschild (90; 190; 290; 390) von der Innenfläche (193) des Schaufelprofilmantels (192) beabstanden.

4. Bauteil nach Anspruch 2 oder 3, wobei die Außenfläche (187) des Holms (186) eine Vielzahl von lateralen Fortsätzen (194) umfasst, die sich von der Außenfläche (187) des Holms (186) weg erstrecken und den Strahlungshitzeschild (90; 190; 290; 390) von der Außenfläche (187) des Holms (186) beabstanden.

5. Bauteil nach einem der vorstehenden Ansprüche, wobei der Strahlungshitzeschild (90) den Holm (86; 186) durchgehend zwischen der radial inneren Plattform (70) und der radial äußeren Plattform (72) umgibt.

6. Bauteil nach einem der Ansprüche 1 bis 4, wobei der Strahlungshitzeschild (190; 290; 390) den Holm (186) nicht durchgehend zwischen der radial inneren Plattform (70) und der radial äußeren Plattform (72) umgibt.

7. Bauteil nach Anspruch 6, wobei der Strahlungshitzeschild (190; 290) einen Abschnitt des Holms (86; 186), der sich von einer aus der radial inneren Plattform (70) und der radial äußeren Plattform (72) aus erstreckt, durchgehend umgibt.

8. Bauteil nach Anspruch 6, wobei der Strahlungshitzeschild (390) Folgendes umfasst:
einen ersten Abschnitt (390B), der durchgehend einen Abschnitt des Holms (86; 186), der sich von der radial inneren Plattform (70) aus erstreckt, umgibt; und
einen zweiten Abschnitt (390A), der von dem ersten Abschnitt (390B) getrennt ist und einen Abschnitt des Holms (86; 186), der sich von der radial äußeren Plattform (72) aus erstreckt, umgibt.

9. Bauteil nach einem der vorstehenden Ansprüche, wobei:
der Holm (86; 186) eine Nickellegierung umfasst;
der Schaufelprofilmantel (92; 192) eine Legierung umfasst, die eines oder mehrere aus Niob, Tantal, Wolfram, Rhenium und Molybdän umfasst; und
der Strahlungshitzeschild (90; 190; 290; 390) eine Legierung umfasst, die eines oder mehr aus Nickel, Cobalt und Gold umfasst.

10. Bauteil nach einem der vorstehenden Ansprüche, wobei der Strahlungshitzeschild mindestens eines aus einem Emissionsvermögen, das 1-50 % beträgt, einem Reflexionsvermögen, das 50-99 % beträgt, und einem Absorptionsvermögen, das 1-80 % beträgt, aufweist.

11. Bauteil nach einem der vorstehenden Ansprüche, wobei der Schaufelprofilmantel (92; 192) eine erste Wand definiert, die eine erste Dicke (T1) aufweist, die senkrecht zu einer/der Außenfläche (87; 187) des Holms (86) gemessen wird, und der Strahlungshitzeschild (90; 190; 290; 390) eine zweite Wand definiert, die eine zweite Dicke (T2) aufweist, die senkrecht zur Außenfläche (87; 187) des Holms (86; 186) gemessen wird; und die erste Dicke (T1) mindestens zweimal die zweite Dicke (T2) beträgt.

12. Bauteil nach einem der vorstehenden Ansprüche, wobei ein Abschnitt (85) des inneren Hohlraums (84), der zwischen dem Holm (86; 186) und dem Strahlungshitzeschild (90; 190; 290; 390) definiert ist, in Fluidverbindung mit einer Quelle für Kühlluft (83) steht.

13. Bauteil nach einem der vorstehenden Ansprüche, wobei der Schaufelprofilmantel (92; 192) Teil einer Turbinenleitschaufel (64) ist.

14. Gasturbinentriebwerk (20), umfassend:
einen Verdichterabschnitt (24);
einen Brennkammerabschnitt (26) in Fluidverbindung mit dem Verdichterabschnitt (24); und
einen Turbinenabschnitt (28) in Fluidverbindung mit dem Brennkammerabschnitt (26), wobei der Turbinenabschnitt (28) eine Turbinenleitschaufel (64) beinhaltet, wobei die Turbinenleitschaufel (64) das Bauteil nach einem der Ansprüche 1 bis 12 umfasst.

## Revendications

1. Composant pour un moteur à turbine à gaz, comprenant :
une coque de surface portante (92 ; 192) ayant une cavité interne (84) et s'étendant entre une plate-forme radialement interne (70) et une plate-forme radialement externe (72) ;
un longeron (86 ; 186) disposé à l'intérieur de la cavité interne (84) ; et
un bouclier thermique radiant (90 ; 190 ; 290 ; 390) qui circonscrit le longeron (86 ; 186) à l'intérieur de la cavité interne (84), le bouclier thermique radiant (90 ; 190 ; 290 ; 390) étant enfermé à l'intérieur de la coque de surface portante (92 ; 192) ;
**caractérisé en ce que** :
la coque de surface portante (92 ; 192) a une plus grande résistance à la chaleur que le longeron (86 ; 186) ;
le longeron (86 ; 186) a une plus grande résistance que la coque de surface portante (92 ; 192) ; et
le bouclier thermique radiant (90 ; 190 ; 290 ; 390) a une réflectance à la chaleur radiante qui est supérieure ou égale à celle du longeron (86 ; 186).

2. Composant selon la revendication 1, dans lequel le bouclier thermique radiant (90 ; 190 ; 290 ; 390) est au moins partiellement espacé d'une surface externe (87 ; 187) du longeron (86 ; 186) et d'une surface interne (93 ; 193) de la coque de surface portante (92).

3. Composant selon la revendication 2, dans lequel la coque de surface portante (192) comprend une pluralité d'extensions latérales (195) qui s'étendent à l'écart de la surface interne (193) de la coque de surface portante (192) et espacent le bouclier thermique radiant (90 ; 190 ; 290 ; 390) de la surface interne (193) de la coque de surface portante (192).

4. Composant selon la revendication 2 ou 3, dans lequel la surface externe (187) du longeron (186) comprend une pluralité d'extensions latérales (194) qui s'étendent à l'écart de la surface externe (187) du longeron (186) et espacent ledit bouclier thermique radiant (90 ; 190 ; 290 ; 390) de la surface externe (187) du longeron (186).

5. Composant selon une quelconque revendication précédente, dans lequel le bouclier thermique radiant (90) circonscrit de manière continue le longeron (86 ; 186) entre la plate-forme radialement interne (70) et la plate-forme radialement externe (72) .

6. Composant selon l'une quelconque des revendications 1 à 4, dans lequel le bouclier thermique radiant (190 ; 290 ; 390) circonscrit de manière discontinue le longeron (186) entre la plate-forme radialement interne (70) et la plate-forme radialement externe (72).

7. Composant selon la revendication 6, dans lequel le bouclier thermique radiant (190 ; 290) circonscrit de manière continue une partie du longeron (86 ; 186) qui s'étend depuis l'une de la plate-forme radialement interne (70) et de la plate-forme radialement externe (72).

8. Composant selon la revendication 6, dans lequel le bouclier thermique radiant (390) comprend :
une première partie (390B) qui circonscrit de manière continue une partie du longeron (86 ; 186) qui s'étend depuis la plate-forme radialement interne (70) ; et
une seconde partie (390A) qui est séparée de la première partie (390B) et circonscrit une partie du longeron (86 ; 186) qui s'étend depuis la plate-forme radialement externe (72).

9. Composant selon une quelconque revendication précédente, dans lequel :
le longeron (86 ; 186) comprend un alliage de nickel ;
la coque de surface portante (92 ; 192) comprend un alliage comprenant l'un ou plusieurs du niobium, du tantale, du tungstène, du rhénium et du molybdène ; et
le bouclier thermique radiant (90 ; 190 ; 290 ; 390) comprend un alliage comprenant l'un ou plusieurs du nickel, du cobalt et de l'or.

10. Composant selon une quelconque revendication précédente, dans lequel le bouclier thermique radiant a au moins l'une d'une émissivité qui est de 1 à 50 %, d'une réflectance qui est de 50 à 99 % et d'une absorptivité qui est de 1 à 80 %.

11. Composant selon une quelconque revendication précédente, dans lequel la coque de surface portante (92 ; 192) définit une première paroi ayant une première épaisseur (T1) mesurée perpendiculairement à une/la surface externe (87 ; 187) du longeron (86), et le bouclier thermique radiant (90 ; 190 ; 290 ; 390) définit une seconde paroi ayant une seconde épaisseur (T2) mesurée perpendiculairement à la surface externe (87 ; 187) du longeron (86 ; 186), et la première épaisseur (T1) est au moins deux fois la seconde épaisseur (T2).

12. Composant selon une quelconque revendication précédente, dans lequel une partie (85) de la cavité interne (84) définie entre le longeron (86 ; 186) et le bouclier thermique radiant (90 ; 190 ; 290 ; 390) est en communication fluidique avec une source d'air de refroidissement (83).

13. Composant selon une quelconque revendication précédente, dans lequel la coque de surface portante (92 ; 192) fait partie d'une aube de turbine (64).

14. Moteur à turbine à gaz (20) comprenant :
une section de compresseur (24) ;
une section de chambre de combustion (26) en communication fluidique avec la section de compresseur (24) ; et
une section de turbine (28) en communication fluidique avec la section de chambre de combustion (26), la section de turbine (28) comportant une aube de turbine (64), l'aube de turbine (64) comprenant le composant selon l'une quelconque des revendications 1 à 12.
